# EUROPEAN PATENT APPLICATION

(11) **EP 4 462 793 A1**
(43) Date of publication of application: **13.11.2024**
(21) Application number: 22918498.1
(22) Date of filing: 29.12.2022
(51) Int. Cl.: H04N 21/2187, H04N 21/236, H04N 21/2389, H04N 21/431

(54) **VIDEO LIVE BROADCASTING METHOD AND SYSTEM, AND COMPUTER STORAGE MEDIUM**

(30) Priority: 04.01.2022 CN 202210005433
(71) Applicant: Hangzhou Alicloud Feitian Information Technology Co., Ltd., Hangzhou, Zhejiang 310023 (CN)
(72) Inventor: HUANG, Qi, Hangzhou City, Zhejiang 310030 (CN); WANG, Yufei, Hangzhou City, Zhejiang 310030 (CN); YE, Tianbing, Hangzhou City, Zhejiang 310030 (CN)
(74) Representative: Barker Brettell LLP
(86) International application number: PCT/CN2022/143625
(87) International publication number: WO 2023/131057

(57) **Abstract**

Embodiments of the present application provide a video live stream method, a system and a computer storage medium. The video live stream method is applied to a cloud live stream service platform, and includes: receiving a trigger instruction from a client terminal for instructing to perform a live stream using a virtual human streamer; performing, according to the trigger instruction, resource scheduling to acquire a cloud resource, where the cloud resource at least includes a first service resource for performing live stream rendering including that for the virtual human streamer and a second service resource for generating a video stream according to a result of the live stream rendering; performing live stream rendering by using the first service resource based on three-dimensional data of the virtual human streamer and scene information of a scene to be live streamed; generating a video stream using the second service resource according to a picture generated by the live stream rendering and an audio corresponding to the scene to be live streamed; and pushing the video stream to a live stream room to be live streamed by using the virtual human streamer. Through embodiments of the present application, requirement for the client terminal device is reduced.

## Description

The present application claims priority to Chinese Patent Application No. 202210005433.0, titled "VIDEO LIVE STREAM METHOD, SYSTEM AND COMPUTER STORAGE MEDIUM", filed to China National Intellectual Property Administration on January 4, 2022, which is hereby incorporated by reference in its entirety.

### TECHNICAL FIELD

Embodiments of the present application relate to the technical field of computers, in particular to a video live stream method, a system and a computer storage medium.

### BACKGROUND

With the development of Internet technology and the widespread popularity of mobile terminals, video live stream has gradually become an important way for people to promote content and products. Traditional video live stream is usually hosted by a real person, but it is difficult for the real person to host continuously. Therefore, a virtual human streamer based on computer graphics technology came into being.

In a common scene of a live stream conducted by the virtual human streamer, it is necessary to render the virtual human streamer using a terminal device, such as a desktop computer and other computer device, of a user watching the live stream. However, the rendering of the virtual human streamer requires high performance of hardware and software of the device, many low-end devices with low performance are not able to render the virtual human streamer, or have a poor rendering effect, which seriously affects an experience of the user watching the live stream.

### SUMMARY

In view of the above, embodiments of the present application provide a video live stream scheme to at least partially solve the above problems.

According to a first aspect of an embodiment of the present application, a video live stream method applied to a cloud live stream service platform is provided, including: receiving a trigger instruction from a client terminal for instructing to perform a live stream using a virtual human streamer; performing, according to the trigger instruction, resource scheduling to acquire a cloud resource, where the cloud resource at least includes a first service resource for performing live stream rendering including that for the virtual human streamer and a second service resource for generating a video stream according to a result of the live stream rendering; performing live stream rendering by using the first service resource based on three-dimensional data of the virtual human streamer and scene information of a scene to be live streamed; generating a video stream using the second service resource according to a picture generated by the live stream rendering and an audio corresponding to the scene to be live streamed; and pushing the video stream to a live stream room to be live steamed by using the virtual human streamer.

According to a second aspect of an embodiment of the present application, a video live stream system set in a cloud, the system is provided, including: a director system, a resource scheduler, and a resource pool; where the director system is configured to receive a trigger instruction from a client terminal for instructing to perform a live stream using a virtual human streamer; and apply for a resource to the resource scheduler according to the trigger instruction; the resource scheduler is configured to allocate a service resource for the resource application from available resources in the resource pool according to the resource application, and the service resource at least includes a first service resource for live stream rendering including that for the virtual human streamer and a second service resource for generating a video stream according to a result of live stream rendering; the director system is further configured to provide the first service resource with three-dimensional data of the virtual human streamer and scene information of a scene to be live streamed, so that the first service resource performs the live stream rendering based on the three-dimensional data of the virtual human streamer and the scene information of the scene to be live streamed; and provide the second service resource with an address of a live stream room to be live streamed by using the virtual human streamer, so that the second service resource pushes the video stream to the address of the live stream room after generating the video stream according to a picture generated by the live stream rendering and an audio corresponding to the scene to be live streamed.

According to a third aspect of an embodiment of the application, an electronic device is provided, which comprises a processor, a memory, a communication interface and a communication bus, where the processor, the memory and the communication interface communicate with each other through the communication bus, and the memory is configured to store at least one executable instruction, and the executable instruction enables the processor to perform an operation corresponding to the method according to the first aspect.

According to a fourth aspect of an embodiment of the present application, a computer storage medium is provided, on which a computer program is stored, which, when executed by a processor, realizes the method as described in the first aspect.

According to the video live stream scheme provided in embodiments of the present application, by pushing the video stream to the live stream room, the viewing user of the live stream can watch the live stream content of the virtual human streamer by visiting the live stream room. As the video stream is rendered in the cloud and then pushed to a terminal of the viewing user, the viewing user's terminal only needs to decode and play the video stream, which has low requirements on computing power of the viewing user's terminal and will not cause additional load to the terminal. Thus, on one hand, adaptability is increased, and good adaptability to a terminal with low configuration is achieved, and it will not cause additional consumption on computing power and electricity. In addition, for the streamer client terminal, corresponding calculation and rendering is not required, and uninterrupted full-hosted live stream can be realized, therefore, computing power requirement for a device of the streamer client terminal is also reduced. Thus, user experience is improved for both the viewing user and a user of the streamer client terminal.

### BRIEF DESCRIPTION OF DRAWINGS

In order to explain technical schemes in the embodiments of the present application or the prior art more clearly, drawings needed in the description of the embodiments or the prior art will be briefly introduced below. Obviously, the drawings in the following description are only some embodiments recorded in the embodiments of the present application, and for those skilled in the art, other drawings can be obtained according to these accompanying drawings.
FIG. 1A is a schematic diagram of an exemplary system to which the method of an embodiment of the present application is applied.
FIG. 1B is a step flow chart of a video live stream method according to embodiment 1 of the present application.
FIG. 1C is a schematic diagram of an exemplary service resource pool applied to the method of an embodiment of the present application.
FIG. 1D is a schematic diagram of an exemplary first service resource processing applied to the method of an embodiment of the present application.
FIG. 1E is a schematic diagram of an exemplary second service resource processing applied to the method of an embodiment of the present application.
FIG. 2 is a flowchart of steps of a video live stream method according to embodiment 2 of the present application.
FIG. 3A is a structural block diagram of a video live stream system according to embodiment 3 of the present application.
FIG. 3B is a process diagram of a video live stream in the embodiment shown in FIG. 3A.
FIG. 4 is a schematic structural diagram of an electronic device according to Embodiment 4 of the present application.

### DESCRIPTION OF EMBODIMENTS

In order to make those skilled in the art better understand the technical scheme in the embodiments of the present application, the technical scheme in the embodiments of the present application will be described clearly and completely in conjunction with the accompanying drawings in the embodiments of the present application. Obviously, the described embodiments are only a part of the embodiments of the present application, but not all of the embodiments. Based on the embodiments in the present application, all other embodiments obtained by those skilled in the art should belong to the protection scope of the embodiments of the present application.

The specific implementation of the embodiments of the present application will be further explained with reference to the accompanying drawings of the embodiments of the present application.

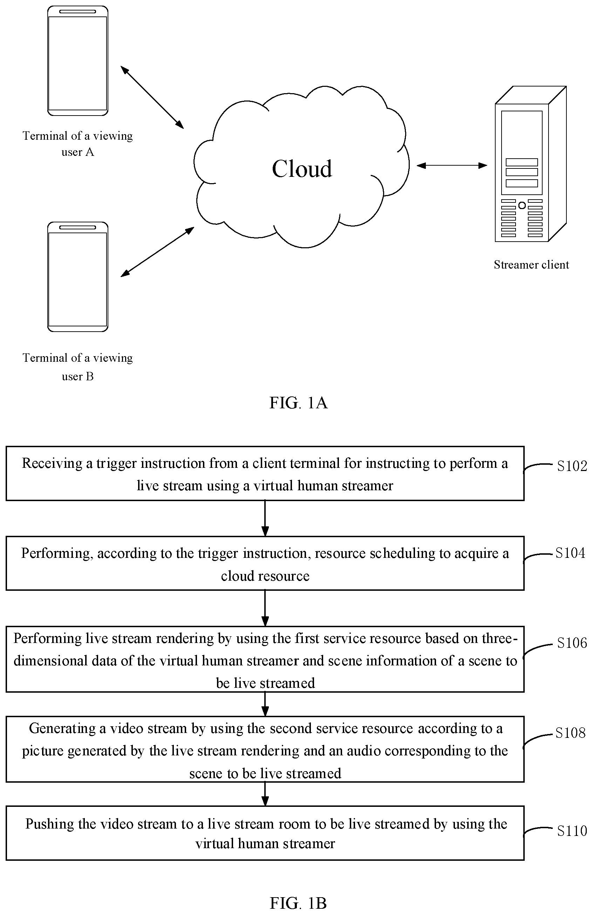

Referring to FIG. 1A, a schematic diagram of an exemplary system of a video live stream method applied to an embodiment of the present application is illustrated. The system at least includes a streamer client and a cloud. In one example, the system may further include at least one terminal (two terminals are shown in the figure) of a viewing user. The streamer client is configured to interact with the cloud to send information related to virtual live stream settings, such as an image, an action and a live stream script of the virtual human streamer, to the cloud. The cloud is configured to generate and render the virtual human streamer and generate an audio of a scene to be live streamed, so as to generate a video stream based on the virtual human streamer and the audio. The terminal of the viewing user can be configured to play the video stream for viewing by the viewing user.

In this embodiment, the cloud can execute a video live stream method to obtain a live video stream.

Based on the above system, referring to FIG. 1B, a step flow chart of a video live stream method according to an embodiment of the present application is illustrated, and the method includes:
Step S102: receiving a trigger instruction from a client terminal for instructing to perform a live stream by using a virtual human streamer.

When the user of the streamer client terminal needs to perform the live stream through the virtual human streamer, a trigger instruction can be generated through a corresponding setting or an option displayed in an live stream application interface of the streamer client terminal, for example, the corresponding setting or the option is "starting the virtual human streamer" or "activating a virtual live stream", and the trigger instruction is sent to the cloud.

In an example, when a human streamer cannot continue a live stream for some reasons, the above setting or option can be clicked. At this time, after receiving the operation, the live stream application of the streamer client terminal will generate a corresponding trigger instruction indicating to perform a live stream by using the virtual streamer, and send the trigger instruction to the cloud, the cloud can carry out a corresponding processing according to the received trigger instruction, so that a live stream room corresponding to the streamer client terminal can continue the live stream with the virtual streamer.

In another example, the user of the streamer client terminal operates on the above setting or option when or before starting the live stream, thus triggering a generation of a trigger instruction and sending it to the cloud. Cloud-based processing can realize virtual live stream from a beginning to an end.

It should be noted that the above setting or option can also include: a setting or an option for configuring a starting time of the live stream, a setting and an option for configuring an image of the virtual human streamer, a setting and an option for configuring a content of the live stream and so on. These settings and options can be implemented in the form of option boxes, option buttons, drop-down menus, etc., which are not limited by the embodiments of the present application. Moreover, information of these configurations can be sent to the cloud carried in the trigger instruction, or it can be sent to the cloud after it is determined that the cloud has successfully received the trigger instruction.

However, the embodiments of the present application are not limited to this, and the trigger instruction can also be generated in the cloud. For example, if the cloud detects that the human streamer in the live stream room has leaved, the trigger instruction can be generated.

Optionally, the trigger instruction may carry at least one of the following information: identification information of the streamer client (such as an identification ID) and identification information of the live stream room (such as the live stream room ID). In addition, optionally, as mentioned above, part or all of the above configuration information can also be carried. Of course, the trigger instruction can also carry other required information, which is not limited here.

Step S 104: performing, according to the trigger instruction, resource scheduling to acquire a cloud resource.

Where, the cloud resource at least includes a first service resource for live stream rendering including that for the virtual human streamer and a second service resource for generating a video stream according to a result of the live stream rendering.

After receiving the trigger instruction, if the cloud has enough resources, it can respond to the trigger instruction and schedule resources based on the trigger instruction. Optionally, after the resources are scheduled, the resources can be locked to prevent resource usage conflicts.

For example, in a feasible way, step S104 can be realized as: selecting a virtual container component resource to be used from available virtual container component resources in the cloud; allocating the virtual container component resource to be used as the first service resource for live stream rendering including that for the virtual human streamer and the second service resource for generating the video stream according to the result of the live stream rendering.

In this embodiment, available virtual container component resources can be scheduled based on K8S, and the virtual container component resource to be used can be selected from a plurality of virtual container component resources through load balancing or other manners. For example, a virtual container component resource pool (such as a pod resource pool) can be set in K8S, and the cloud selects one of available pods from the resource pool after receiving the trigger instruction, and one part of the pod resource is used as the first service resource to render the virtual human streamer, and the other part is used as the second service resource to generate the video stream. That is, the first service resource and the second service resource share a pod environment.

As the first service resource and the second service resource are located in a same virtual container component resource, data transmission and interaction between them can be completed within the component, without communication and data transmission between components, thus improving communication efficiency and reducing data transmission cost.

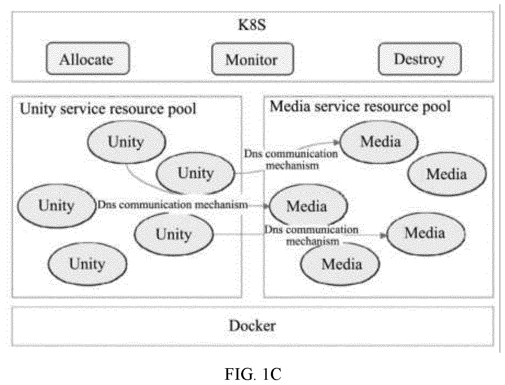

Illustratively, the above-mentioned virtual container component resource pool is shown in FIG. 1C. As can be seen from FIG. 1C, the resource pool based on K8S technology includes unity service resource pool and media service resource pool, and each resource in the resource pool may be realized by one or more Docker containers. When allocating resources, if there is an available resource, the resource is allocated. It should be noted that the communication and interaction between the unity service resources in the unity service resource pool and the media resources in the media service resource pool are simply illustrated in the figure, but in practical application, the direct communication and interaction between them can be realized by deploying them in a same pod. Among them, one pod manages a group of Docker containers, which share an IP address of the pod, and the containers can communicate directly with each other, and the data can also be shared directly with each other.

In addition, distribution function, monitoring function and destruction function of K8S shown in FIG. 1C are conventional functions of K8S, and their specific implementation can refer to related technologies, which will not be described in detail here.

Step S106: performing live stream rendering by using the first service resource based on three-dimensional data of the virtual human streamer and scene information of a scene to be live streamed.

The first service resource can be used to provide unity service, which provides mature 3D image generation and real-time 3D interactive content creation technology. With the help of the unity service, generation and rendering of the virtual human streamer can be realized with lower cost and higher effect presentation. It should be noted that in this embodiment of the application, the virtual human streamer does not only mean human images, but also other 3D images such as animal images or cartoon images are within the scope of the virtual human streamer in the present embodiment of the application.

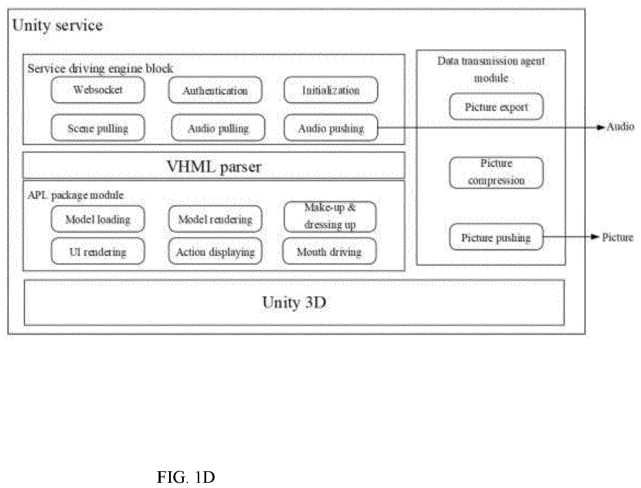

Taking unity service as an example, as shown in FIG. 1D, the unity service includes a service-driven engine module, an API encapsulation module and a data transmission agent module.

The service-driven engine module includes a websocket unit, an authentication unit, an initialization unit, a scene pulling unit, an audio pulling unit and an audio pushing unit.

The initialization unit is configured to initialize the unity service, and the specific process will be detailed below.

The authentication unit is configured to authenticate that the live stream room using the unity service. For example, an authentication can be performed based on information such as an ID of the streamer client or an ID of the live stream room, and if the authentication is passed, the unity service can be provided for a corresponding streamer client terminal or live stream room.

The scene pulling unit can interact with a driving engine that stores scene information of a plurality of live stream scenes to pull the scene information needed to be used in the live stream process. For example, the scene information of the scene to be live streamed can be obtained from the driving engine storing the scene information of the plurality of live stream scenes through a pre-established websocket communication connection. Among them, the websocket communication connection can be established by the websocket unit. The websocket communication connection is a persistent connection. Using this connection mode, data processing burden in need of continuous connection processing caused by a need to continuously obtain scene information during the live stream can be avoided. The scene information includes, but is not limited to, information associated with the live stream scene, for example, information of a live stream object (taking e-commerce as an example, it can be information of goods to be sold, information of a playing order of the goods, etc.), and optionally, the scene information can also include audio used in the live stream, which is not restrictive. The scene information can also include information of interaction with a viewing user during the live stream, such as information of interacting a red packet, and so on. The audio pulling unit is configured to pull the audio needed to be used in the virtual live stream process. In a feasible way, the audio pulling unit pulls a text content needed to be played during the virtual live stream and then converts it into audio. Further, the audio is subsequently sent together with a picture through an audio push unit.

Corresponding to each functional unit in the service-driven engine, the API encapsulation module encapsulates APIs for realizing various specific functions, which are illustrated as an API for model loading, an API for model rendering, an API for UI rendering, an API for action playing of virtual human streamer, an API for mouth driving of the virtual human streamer, and an API for makeup & dressing of the virtual human streamer. These APIs are called by functional units in the service-driven engine when required, and are parsed by a VHML parser for use by each functional unit in the service-driven engine.

After a corresponding function are realized by the service-driven engine, the 3D virtual human streamer is generated and rendered to form a corresponding picture, the picture is then sent to the second service resource for subsequent video generation after a series of processing such as picture export, picture compression and picture push by the data transmission agent.

It should be noted that, different from a traditional unity service, the unity service in this embodiment is provided with the data transmission agent, which can process the picture while render a three-dimensional image, so that a three-dimensional rendering and a data transmission can be carried out synchronously and in parallel, thus improving efficiency of the three-dimensional rendering and the data transmission.

Step S108: generating a video stream by using the second service resource according to the picture generated by the live stream rendering and the audio corresponding to the scene to be live streamed.

The second service resource receives the picture and the audio pushed by the first service resource, the second service resource can process them and generate a video stream.

In a feasible way, step S108 can be realized as: respectively obtaining the picture generated by the live stream rendering and the audio corresponding to the scene to be live streamed; performing audio-video multiplexing operation using the second service resource based on the picture and the audio, and obtaining a video stream according to an operation result.

Where the picture obtained by the second service resource is the picture transmitted by the first service resource through the data transmission agent and generated by the live stream rendering. The audio obtained by the second service resource is audio generated after voice conversion of a scene text corresponding to the scene to be live streamed.

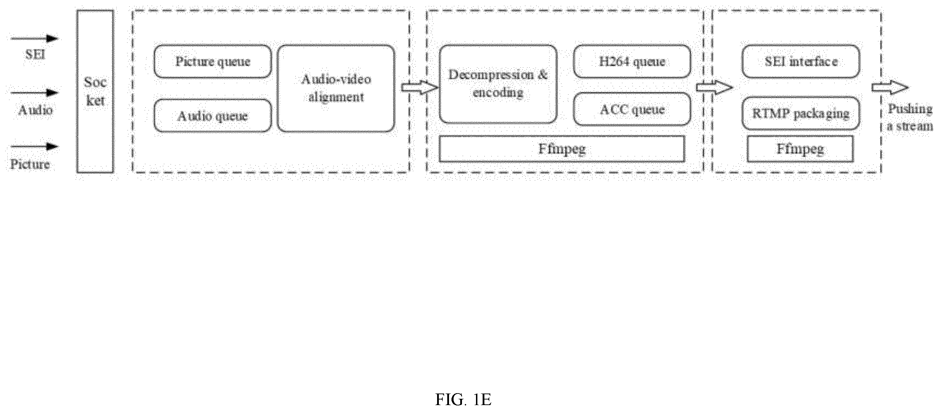

In one example, as shown in FIG. 1E, the picture pushed by the first service resource will be sent to a picture queue, and the pushed audio will be sent to an audio queue. The second service resource reads the picture and the audio from the picture queue and the audio queue, and then performs audio-video alignment processing to ensure a synchronization of the audio and the picture. After the audio and video are aligned, the audio and video are decompressed and encoded to output an H264 queue corresponding to the video and an ACC queue corresponding to the audio, and then the two queues are packaged to form a video stream.

Optionally, as shown in FIG. 1E, in addition to the audio and the picture, the second service resource also acquires supplementary enhancement information SEI that can be carried in the video stream. In this example, the SEI is mainly used to characterize information of an interactive object in the scene to be live streamed, such as a red packet and an interactive pet. That is, if the information of the interactive object in the scene to be live streamed is obtained, the SEI can be used to carry the information of the interactive object. Then, in this case, the performing the audio-video multiplexing operation using the second service resource based on the picture and the audio, and obtaining the video stream according to the operation result can be realized as: performing the audio-video multiplexing operation on the picture, the audio and the SE1 using the second service resource, and obtaining the video stream according to the operation result.

Step S 110: pushing the video stream to a live stream room to be live steamed by using the virtual human streamer.

In a feasible way, step S 110 can be realized as: according to a pre-acquired live stream start time configuration of the client terminal, pushing the video stream to an address corresponding to the live stream room to be live streamed by using the virtual human streamer at time indicated by the configuration.

The live stream start time can be preset through the streamer client terminal, and in a case that the live stream start time is configured, after the video stream is obtained, the video stream is pushed to the address corresponding to the live stream room when the live stream start time arrives.

By pushing the video stream to the live stream room, the viewing user of the live stream can watch the live stream content of the virtual human streamer by visiting the live stream room. As the video stream is rendered in the cloud and then pushed to a terminal of the viewing user, the viewing user's terminal only needs to decode and play the video stream, which has low requirements on computing power of the viewing user's terminal and will not cause additional load to the terminal. Thus, on one hand, adaptability is increased, and good adaptability to a terminal with low configuration is achieved, and it will not cause additional consumption on computing power and electricity. In addition, for the streamer client terminal, corresponding calculation and rendering is not required, and uninterrupted full-hosted live stream can be realized, therefore, computing power requirement for a device of the streamer client terminal is also reduced. Thus, user experience is improved for both the viewing users and a user of the streamer client terminal.

### Embodiment 2

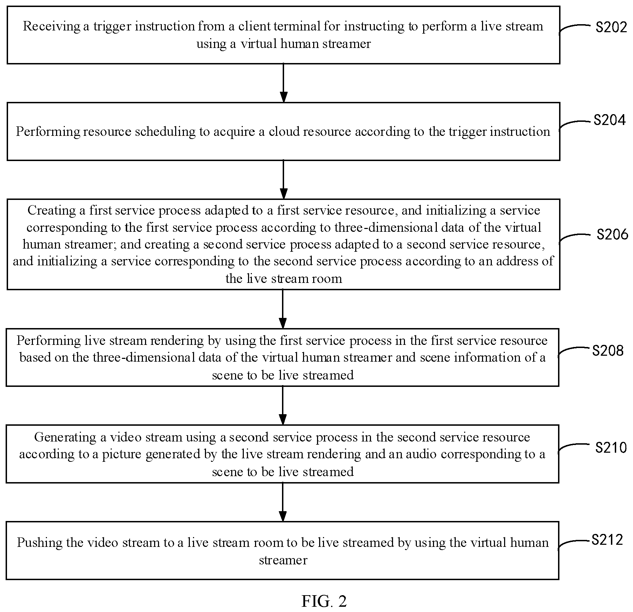

Referring to FIG. 2, a step flow chart of a video live stream method in Embodiment 2 of the present application is illustrated.

This embodiment focuses on the implementation of the first service resource and the second service resource to explain the video live stream method of the embodiment of the present application. The method includes the following steps:
Step S202: receiving a trigger instruction from a client terminal for instructing to perform a live stream using a virtual human streamer.

In this embodiment, the trigger instruction carries identification information of the live stream room. An address of the live stream room can be obtained based on the identification information of the live stream room. For example, the identification information of the live stream room is obtained from the trigger instruction; and the address of the live stream room corresponding to the identification information is obtained from a live stream system for managing the live stream room according to the identification information of the live stream room. The live stream system can be deployed in the cloud or in other servers or service clusters outside the cloud. The live stream system is configured to manage a plurality of live stream rooms, in which information related to the live stream rooms is stored, including but not limited to a corresponding relationship between the identification information and the address information of the live stream rooms, and a live stream preview is issued for the live stream rooms.

Step S204: performing resource scheduling to acquire a cloud resource according to the trigger instruction.

According to the trigger instruction, a specific implementation of resource scheduling to obtain the cloud resource can be referred to the description of relevant parts in the previous embodiment, so will not be repeated here.

In a feasible way, after obtaining the cloud resource, a live stream preview can also be created for the live stream room to be live streamed by using the virtual human streamer.

In order to make an audience user watches the live stream in time, and to avoid waiting of the audience user caused by related operations in the cloud, a live stream preview can be created for the live stream room using the virtual human streamer. The live stream preview can include information on the streaming time and optionally, information related to the live stream content, so that the audience user can know relevant information. However, it should be clear to those skilled in the art that in practical application, the live stream preview may also include other relevant information, and a specific information content can be set by those skilled in the art according to actual needs, and is not limited by the embodiment of the present application.

Step S206: creating a first service process adapted to a first service resource, and initializing a service corresponding to the first service process according to three-dimensional data of the virtual human streamer; and creating a second service process adapted to a second service resource, and initializing a service corresponding to the second service process according to an address of the live stream room.

First of all, it should be noted that in this step, the creation of the first service process and the creation of the second service process can be performed in no particular order or in parallel.

In this embodiment, the live stream rendering process is specifically realized by the first service process, and the generation of the video stream is specifically realized by the second service process. Therefore, after resource scheduling is performed in the cloud to obtain the first service resource and the second service resource, the corresponding first service process and the second service process are created respectively, and service initialization operations are performed on the two processes respectively.

Among them, the initialization of the first service process can be carried out according to the three-dimensional data of the virtual human streamer, the three-dimensional data indicates a specific image of the virtual human streamer, including but not limited to basic three-dimensional model data, hairstyle data, clothing data, etc. of the used three-dimensional person (or animals or others), and based on these data, a three-dimensional image of a three-dimensional virtual human streamer can be generated. In a feasible way, the service corresponding to the first service process can be initialized according to the three-dimensional data of the virtual human streamer and obtained scene information of the scene to be live streamed. The scene information mainly describes information of an live stream object (items or contents to be promoted or sold, and so on) to be live streamed. According to the three-dimensional data of the virtual human streamer and the scene information, the first service process can render a complete three-dimensional live stream process. As mentioned above, the scene information of the scene to be live streamed can be obtained from a driving engine storing the scene information of a plurality of live stream scenes through a pre-established websocket communication connection.

In one example, a corresponding unity service process can be created for the first service resource as the first service process, and the unity service process renders the corresponding three-dimensional streamer character based on the obtained three-dimensional data of the virtual human streamer to complete initialization. If the scene information of the scene to be live streamed is also obtained, a 3D object corresponding to the scene information can also be rendered to form a 3D live stream room together with the 3D streamer character, thus realizing the initialization of the service corresponding to the first service process.

For the second service process, the service corresponding to the second service process can be initialized according to the address of the live stream room. In a feasible way, as the trigger instruction of this embodiment carries identification information of the live stream room, the address of the live stream room corresponding to the identification information can be obtained from the live stream system for managing the live stream room based on the identification information. On this basis, the second service process is then initialized.

For example, a multimedia codec service process can be created for the second service resource as the second service process, and the service corresponding to the second service process can be initialized by obtaining the address of the live stream room.

From the above, it can be seen that the first service process and the second service process are mainly used to realize corresponding services, such as 3D rendering and video stream generation. When these services are implemented, storage resources, computing resources and so on are also needed. Therefore, in a broad sense, it can be considered that in the embodiment of the present application, the first service resource and the second service resource include not only the corresponding first service process and the second service process, but also the necessary resources needed by the processes to realize the corresponding functions.

Step S208: performing live stream rendering by using the first service process in the first service resource based on the three-dimensional data of the virtual human streamer and scene information of a scene to be live streamed.

As mentioned above, based on an execution ability of the process, the live stream rendering including that for the virtual human streamer can be realized through the first service process according to the three-dimensional data of the virtual human streamer and the scene information of the scene to be live streamed.

Step S210: generating a video stream using a second service process in the second service resource according to a picture generated by the live stream rendering and an audio corresponding to a scene to be live streamed.

The second service process can generate a corresponding video stream through audio-video multiplexing technology based on the picture generated by the live stream rendering of the first service process and the audio corresponding to the scene to be live streamed obtained in advance. The specific implementation of the video stream generation process can refer to the description of relevant parts in the previous embodiment, and will not be described here.

Step S212: pushing the video stream to a live stream room to be live streamed by using the virtual human streamer.

In an example, the video stream can be pushed to a live stream CDN corresponding to the address based on the address of the live stream room obtained when the service corresponding to the second service process is initialized. The video stream corresponding to the live stream stored in the live CDN can be pulled from this address by the live stream room when the live stream starts, and then sent to a terminal of each audience user for viewing by a viewing user. In this way, it not only facilitates storage of the live video stream, but also facilitates streaming in the live stream room, and improves data processing efficiency for the live video stream.

By pushing the video stream to the live stream room, the viewing user of the live stream can watch the live stream content of the virtual human streamer by visiting the live stream room. As the video stream is rendered in the cloud and then pushed to a terminal of the viewing user, the viewing user's terminal only needs to decode and play the video stream, which has low requirements on computing power of the viewing user's terminal and will not cause additional load to the terminal. Thus, on one hand, adaptability is increased, and good adaptability to a terminal with low configuration is achieved, and it will also not cause additional consumption on computing power and electricity. In addition, for the streamer client terminal, corresponding calculation and rendering is not required, and uninterrupted full-hosted live stream can be realized, therefore, computing power requirement for a device of the streamer client terminal is also reduced. Thus, user experience is improved for both the viewing user and a user of the streamer client terminal.

### Embodiment 3

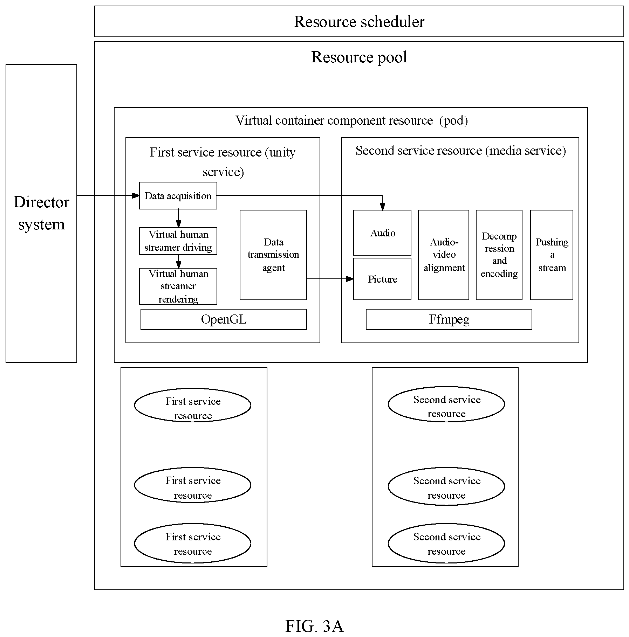

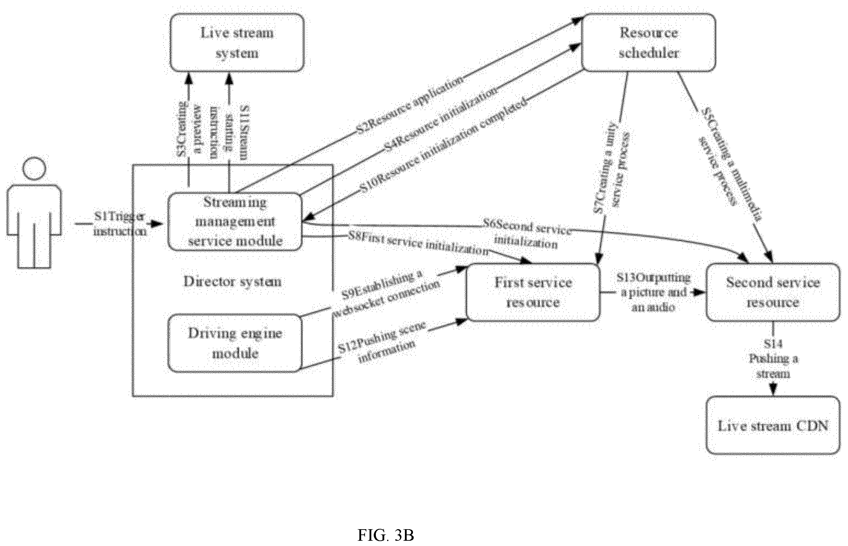

Hereinafter, with reference to FIG. 3A and FIG. 3B, a video live stream system of the embodiment of the present application and a live stream process based on the system is described.

As shown in FIG. 3A, the video live stream system is set in the cloud, and the system includes a director system, a resource scheduler and a resource pool.

Wherein, the director system is configured to receive a trigger instruction from a client terminal (a streamer client terminal) for instructing to perform a live stream using a virtual human streamer; and apply for a resource to the resource scheduler according to the trigger instruction.

The resource scheduler is configured to allocate a service resource for a resource application from available resources in the resource pool according to the resource application, and the service resource at least includes a first service resource for live stream rendering including that for the virtual human streamer and a second service resource for generating a video stream according to a result of live stream rendering.

The director system is further configured to provide the first service resource with three-dimensional data of the virtual human streamer and scene information of a scene to be live streamed, so that the first service resource performs live stream rendering based on the three-dimensional data of the virtual human streamer and the scene information of the scene to be live streamed; further, provide the second service resource with an address of the live stream room to be live streamed by using the virtual human streamer, so that the second service resource can push a video stream to the address of the live stream room after generating the video stream according to a picture generated by the live stream rendering and an audio corresponding to the scene to be live streamed.

In an example, the director system at least includes a streaming management service module and a driving engine module. The streaming management service module is connected with the streamer client terminal.

The streaming management service module is configured to receive the trigger instruction for instructing to perform the live stream using the virtual human streamer, and apply for the resource to the resource scheduler according to the trigger instruction; provide the first service resource with the three-dimensional data of the virtual human streamer; and obtain the address of the live stream room to be live streamed by using the virtual human streamer, and provide the address to the second service resource.

The driving engine module is configured to provide the first service resource with pre-stored scene information of the scene to be live streamed.

Optionally, the first service resource and the second service resource use the same virtual container component resource; the first service resource transmits the picture generated by live stream rendering to the second service resource through a data transmission agent. In this way, communication cost can be reduced.

With reference to FIG. 3B, the process of video live stream based on the above video live stream system is described as follows.

First of all, in this example, after the streaming management service module receives that a human streamer of the streamer client terminal has leaved, the streaming management service module applies a resource from the resource scheduler according to the trigger instruction sent by the streamer client terminal, and locks the resource after the resource has been applied.

After locking the resource, the streaming management service module creates a live stream preview and sends it to the live stream system. The live stream preview can carry information on starting time of the live stream, which is convenient for the live stream system to push to the corresponding live stream room, so that the live stream room is able to inform its audience of time of the live stream to be started in time. It should be noted that, what is not shown in the figure is that, the trigger instruction carries ID of the live stream room. After receiving the trigger instruction, the streaming management service model will also obtain the address information of the live stream room corresponding to the ID from the live stream system based on the ID of the live stream room.

After the preview is successfully created and sent to the live stream system, the streaming management service module sends a resource initialization request to the resource scheduler to request initialization of the obtained first service resource, namely the unity service in this example and the second service resource, namely the media service in this example. Based on this request, the resource scheduler, on one hand, creates a multimedia service process and obtains the address of the live stream room from the streaming management service module through this process to complete the initialization of the media service. On the other hand, the resource scheduler also creates a unity service process, which obtains the three-dimensional data of the virtual human streamer from the streaming management service module to complete the initialization of the unity service.

After the unity service is initialized, websocket connection is established with the driving engine module to ensure that the scene information can be obtained from the driving engine module stably and continuously during the live stream.

After the above process is completed, the resource scheduler will send a message that the resource initialization is completed to the streaming management service module. Based on this message, after the streaming time arrives, the streaming management service module can inform the corresponding unity service and media service, so that they can realize their respective functions of 3D rendering and video stream generation. As shown in the figure, the unity service will drive and render the virtual human streamer based on the obtained data (including the 3D data of the virtual human streamer obtained from the streaming management service module and the scene information pushed by the driving engine module), and continuously output live picture and audio to the media service through the data transmission agent.

The media service, after receiving the picture and the audio from the unity service, performs audio-video alignment, decompression, coding and other processing to generate a video stream. Furthermore, the generated video stream is pushed to the live stream CND, specifically to the address of the live stream room in the live stream CDN, for the streamer client terminal to pull the stream.

It can be seen from the above that the video live stream system uses the cloud to render the virtual human streamer, which can well meet the requirements of device performance for virtual human streamer rendering. There is no need for the streamer client terminal or the terminal of the viewing user to have higher computing power. The streamer client terminal can upload configuration related to the live stream, such as configuration of the three-dimensional image of the virtual human streamer, configuration of the live stream object, configuration of the stream content, etc., to realize uninterrupted full-hosted live stream.

### Embodiment 4

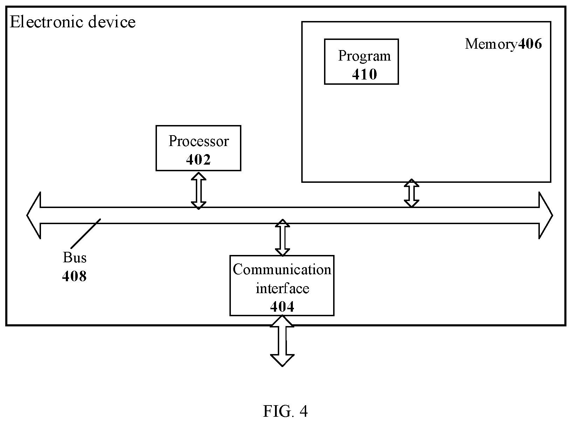

Referring to FIG. 4, a structural schematic diagram of an electronic device according to embodiment 4 of the present application is shown, and the specific embodiment of the present application does not limit the specific implementation of the electronic device.

As shown in FIG. 4, the electronic device may include a processor (processor) 402, a communications interface (Communications Interface) 404, a memory (memory) 406, and a communication bus 408. Processor 402, communication interface 404 and memory 406 communicate with each other through the communication bus 408. The communication interface 404 is configured to communicate with other electronic devices or a server. The processor 402 is configured to execute a program 410, which can specifically execute the relevant steps in the above method embodiment. Specifically, the program 410 may include program code including computer operation instructions.

The processor 402 may be a CPU, or an application specific integrated circuit ASIC (Application Specific Integrated Circuit), or one or more integrated circuits configured to implement the embodiments of the present application. One or more processors included in an intelligent device can be the same type of processors, such as one or more CPU. One or more processors included in an intelligent device can also be different types of processors, such as one or more CPUs and one or more ASIC.

The memory 406 is configured to store the program 410. The memory 406 may include a high-speed RAM memory, and may also include a non-volatile memory (non-volatile memory), such as at least one disk memory.

The program 410 can be specifically used to cause the processor 402 to perform operations corresponding to the aforementioned methods. For the specific implementation of each step in the program 410, please refer to the corresponding descriptions in the corresponding steps and units in the above-mentioned method embodiment, which are not repeated here. It can be clearly understood by those skilled in the art that, for the convenience and conciseness of description, the specific working processes of the devices and modules described above can be referred to the corresponding process descriptions in the aforementioned method embodiments, and will not be repeated here.

An embodiment of the present application also provides a computer program product, which comprises computer instructions, and the computer instructions instruct a computing device to perform operations corresponding to any method of the above-mentioned a plurality of method embodiments.

It should be pointed out that, according to the needs of implementation, each component/step described in the embodiments of the present application can be split into more components/steps, and two or more components/steps or partial operations of components/steps can be combined into new components/steps to achieve the purpose of the embodiments of the present application.

The above-mentioned method according to the embodiment of the present application can be implemented in hardware, firmware, or implemented as software or computer code that can be stored in a recording medium (such as CD ROM, RAM, floppy disk, hard disk or magneto-optical disk), or be implemented as computer code that was originally stored in a remote recording medium or a non-transitory machine-readable medium downloaded through a network and will be stored in a local recording medium, so that the method described herein can be processed by such software stored on the recording medium using a general-purpose computer, a dedicated processor, or programmable or dedicated hardware (such as ASIC or FPGA). It can be understood that a computer, processor, microprocessor controller or programmable hardware includes a storage component (e.g., RAM, ROM, flash memory, etc.) that can store or receive software or computer code, and when the software or computer code is accessed and executed by the computer, processor or hardware, the method described herein is realized. Furthermore, when a general-purpose computer accesses the code for implementing the method shown herein, the execution of the code converts the general-purpose computer into a dedicated computer for executing the method shown herein.

Those skill in the art can realize that the units and method steps of various examples described in connection with the embodiments disclosed herein can be implemented in electronic hardware, or a combination of computer software and the electronic hardware. Whether these functions are implemented in hardware or software depends on specific application and design constraints of the technical scheme. Those skilled in the art can use different methods to realize the described functions for each specific application, but this realization should not be considered beyond the scope of the embodiments of the present application.

The above embodiments are only used to illustrate the embodiments of the present application, but not to limit the embodiments of the present application. Those skilled in the art can make various changes and modifications without departing from the spirit and scope of the embodiments of the present application, all equivalent technical solutions also belong to the scope of the embodiments of the present application, and the patent protection scope of the embodiments of the present application should be defined by the claims.

## Claims

1. A video live stream method, applied to a cloud live stream service platform, comprising:
receiving a trigger instruction from a client terminal for instructing to perform a live stream using a virtual human streamer;
performing, according to the trigger instruction, resource scheduling to acquire a cloud resource, wherein the cloud resource at least includes a first service resource for performing live stream rendering including that for the virtual human streamer and a second service resource for generating a video stream according to a result of the live stream rendering;
performing live stream rendering by using the first service resource based on three-dimensional data of the virtual human streamer and scene information of a scene to be live streamed;
generating a video stream using the second service resource according to a picture generated by the live stream rendering and an audio corresponding to the scene to be live streamed;
pushing the video stream to a live stream room to be live streamed by using the virtual human streamer.

2. The method according to claim 1, wherein the pushing the video stream to a live stream room to be live streamed by using the virtual human streamer comprises:
according to a pre-acquired live stream start time configuration of the client terminal, pushing the video stream to an address corresponding to the live stream room to be live streamed by using the virtual human streamer at time indicated by the configuration.

3. The method according to claim 1, wherein after the performing resource scheduling to acquire the cloud resource, the method further comprises:
creating a first service process adapted to the first service resource, and initializing a service corresponding to the first service process according to the three-dimensional data of the virtual human streamer; and,
creating a second service process adapted to the second service resource, and initializing a service corresponding to the second service process according to an address of the live stream room.

4. The method according to claim 3, wherein the initializing a service corresponding to the first service process according to the three-dimensional data of the virtual human streamer comprises:
initializing the service corresponding to the first service process according to the three-dimensional data of the virtual human streamer and obtained scene information of the scene to be live streamed;
wherein the scene information of the scene to be live streamed is obtained in the following manners:
obtaining the scene information of the scene to be live streamed from a driving engine storing scene information of a plurality of live stream scenes through a pre-established websocket communication connection.

5. The method according to claim 3, wherein the trigger instruction carries identification information of the live stream room;
the address of the live stream room is obtained in advance in the following manners:
obtaining the identification information of the live stream room from the trigger instruction;
obtaining the address of the live stream room corresponding to the identification information from a live stream system for managing the live stream room according to the identification information of the live stream room.

6. The method according to any one of claims 1-5, wherein the performing resource scheduling to acquire a cloud resource comprises:
selecting a virtual container component resource to be used from available virtual container component resources in the cloud;
allocating the virtual container component resource to be used as the first service resource for the live stream rendering including that for the virtual human streamer and the second service resource for generating the video stream according to the result of live stream rendering.

7. The method according to any one of claims 1-5, wherein the generating a video stream using the second service resource according to a picture generated by the live stream rendering and an audio corresponding to the scene to be live streamed comprises:
respectively obtaining the picture generated by the live stream rendering and the audio corresponding to the scene to be live streamed;
performing audio-video multiplexing operation by using the second service resource based on the picture and the audio, and obtaining the video stream according to an operation result.

8. The method according to claim 7, wherein the respectively obtaining the picture generated by the live stream rendering and the audio corresponding to the scene to be live streamed comprises:
obtaining the picture transmitted by the first service resource through a data transmission agent and generated by the live stream rendering; and acquiring the audio generated after voice conversion of a scene text corresponding to the scene to be live streamed.

9. The method according to claim 7, wherein,
the method further comprises: obtaining information of an interactive object in the scene to be live streamed, and carrying the information of the interactive object with supplementary enhancement information;
the performing audio-video multiplexing operation by using the second service resource based on the picture and the audio, and obtaining the video stream according to the operation result comprises: performing the audio-video multiplexing operation on the picture, the audio and the supplementary enhancement information by using the second service resource to, and obtaining the video stream according to the operation result.

10. The method according to any one of claims 3-5, wherein the pushing the video stream to the live stream room to be live streamed by using the virtual human streamer comprises:
pushing the video stream to a live stream CDN corresponding to the address based on the address of the live stream room obtained when initializing the service corresponding to the second service process.

11. A video live stream system set in a cloud, the system comprising: a director system, a resource scheduler, and a resource pool;
wherein:
the director system is configured to receive a trigger instruction from a client terminal for instructing to perform a live stream using a virtual human streamer; and apply for a resource to the resource scheduler according to the trigger instruction;
the resource scheduler is configured to allocate a service resource for the resource application from available resources in the resource pool according to the resource application, and the service resource at least includes a first service resource for live stream rendering including that for the virtual human streamer and a second service resource for generating a video stream according to a result of live stream rendering;
the director system is further configured to provide the first service resource with three-dimensional data of the virtual human streamer and scene information of a scene to be live streamed, so that the first service resource performs the live stream rendering based on the three-dimensional data of the virtual human streamer and the scene information of the scene to be live streamed; and provide the second service resource with an address of a live stream room to be live streamed by using the virtual human streamer, so that the second service resource pushes the video stream to the address of the live stream room after generating the video stream according to a picture generated by the live stream rendering and an audio corresponding to the scene to be live streamed.

12. The system according to claim 11, wherein the director system at least comprises a streaming management service module and a driving engine module;
the streaming management service module is configured to receive the trigger instruction for instructing to perform the live stream using the virtual human streamer, and apply for the resource to the resource scheduler according to the trigger instruction; and provide the first service resource with the three-dimensional data of the virtual human streamer; and obtain the address of the live stream room to be live streamed by using the virtual human streamer, and provide the address to the second service resource; and
the driving engine module is configured to provide the first service resource with pre-stored scene information of the scene to be live streamed.

13. The system according to claim 11, wherein the first service resource and the second service resource use a same virtual container component resource; and the first service resource transmits the picture generated by the live stream rendering to the second service resource through a data transmission agent.

14. A computer storage medium, on which a computer program is stored, which, when executed by a processor, realizes the video live stream method according to any one of claims 1-10.
